# EUROPEAN PATENT SPECIFICATION

(11) **EP 0 853 909 B1**
(45) Date of publication and mention of the grant of the patent: **12.12.2001**
(21) Application number: 98200062.2
(22) Date of filing: 13.01.1998
(51) Int. Cl.: A47J 31/54

(54) **Boiler with facility for tapping off hot water**
Boiler mit Einrichtung zum Abzapfen von heissem Wasser
Chaudière à dispositif à soutirer de l'eau chaude

(30) Priority: 13.01.1997 NL 1004985
(43) Date of publication of application: 22.07.1998
(73) Proprietor: Bravilor Holding B.V., 1700 AD Heerhugowaard (NL)
(72) Inventor: Van Eijnatten, Eric Michael Cornelis Maria, 1713 SN Obdam (NL); Spijker, Antonius Johannes, 1724 NJ Oudkarspel (NL); Sprenkeling, Cornelis Theodorus Maria, 8584 VW Hemelum (NL)
(74) Representative: de Bruijn, Leendert C.

(56) References cited:
- FR-A- 1 142 840
- FR-E- 46 525
- GB-A- 1 242 133
- GB-A- 2 079 908
- US-A- 4 601 263

## Description

The invention relates to an apparatus for heating water to above the boiling point, provided with:
- a closed vessel in which the water to be heated is contained
- heating means for heating the water in the vessel
- a feed connection with a feed tap for feeding cold water into the vessel
- control means for controlling the feed tap such that a predetermined water level in the vessel is maintained,
- a discharge connection with a discharge line to a discharge tap for discharging hot water from the vessel
- a heat exchanger of which the hot water circuit extends between the discharge connection and the discharge tap and the cold water circuit extends between the feed tap and the feed connection such that the hot water in the hot water circuit is able to exchange heat with the cold water in the cold water circuit.

Apparatus of this type is known from US 4.601.263. It is used, inter alia, in the catering trade for supplying both steam and hot water.

If hot water is tapped off directly from a boiler, this hot water will start to boil immediately at the outlet. In other words, the hot water will sputter and bubble as it flows from the tap, which can give rise to unpleasant situations. This effect is the more pronounced the higher the pressure in the boiler.

A solution for this problem could be to mix the hot water flowing from the vessel with cold water which, for example, is taken from the water mains. Indeed a mixture which has a temperature lower than the boiling point at atmospheric pressure is created in this manner, but a disadvantage thereof is that cold water from the water supply is used which has not yet boiled. However, for the preparation of some drinks, in particular for the preparation of tea, it is desirable that the water has at least boiled. After boiling a number of substances, such as air, lime, CO₂ and the like have largely disappeared from the water. Moreover, any pathogens present are killed by heating the water. Because of the different pressures which prevail in the boiler and in the water supply, the mixing process also does not always proceed without problems.

To solve the above-mentioned problem in US 4,601,263 a heat exchanger is installed between the discharge connection to the vessel and the discharge tap. The hot water circuit of this heat exchanger extends between the discharge connection and the discharge tap and the cold water circuit extends between the feed tap and the feed connection such that the hot water in the hot water circuit is able to exchange heat with the cold water in the cold water circuit.

If the discharge tap is then opened, the hot water will flow through the heat exchanger, be cooled down in the latter and then reach the discharge tap having been cooled to below the boiling point at atmospheric pressure. In fact the prior art heat exchanger may consist of a number of stages such that each stage is able to deliver water of a specific temperature.

In practice the apparatus according to US 4,601,263 proves to be rather voluminous and does not function satisfactorily.

The object of the invention is now to solve this problem.

In agreement with the invention the apparatus as defined in the first paragraph of this description is now characterised in that the apparatus is provided with a second discharge connection with a second discharge line for discharging hot water from the vessel, which second discharge line is connected to the first discharge line between the heat exchanger and the discharge tap, such that the boiling hot water from the vessel becomes mixed with cooled water from the heat exchanger. To be sure that under all practical circumstances enough cooled water is available the capacity of the hot water circuit of the heat exchanger is such the amount of cooled water therein is sufficient to become mixed with the maximum batch of boiling hot water to be discharged from the vessel through the second discharge line.

By mixing boiling hot water of a predetermined temperature and cooled water also of a rather constant predetermined temperature, water of a desired temperature is obtained . Furthermore, all the water originates from the vessel and has thus boiled.

It is preferred that measures are taken to restrict the cold water feed in velocity such that during the relative short period in which hot water is delivered through the discharge tap no significant cooling action in the heat exchanger is performed whereas during a relative long succeeding period the hot water now present in the hot water circuit is cooled down by the incoming cold water.

In order to be able to adjust the temperature, it is preferable that the apparatus is provided with a throughput-limiting element in one of the discharge lines. Preferably, said throughput-limiting element is adjustable.

In this context it is preferable that the apparatus is provided with a sensor for direct or indirect measurement of the temperature of the water in the vessel and is provided with a control unit for controlling the throughput-limiting element as a function of the signal from the sensor.

Although use can be made of temperature sensors, it is nevertheless preferable that the sensor is a pressure sensor by means of which the pressure in the vessel is measured. There is then a fixed relationship between the temperature in the vessel and the pressure therein. In general, a pressure sensor will already have been fitted and this can now be used for a dual function.

To avoid too large temperature variations at the output side of the heat exchanger it is preferred that the capacity of the heat exchanger is such the maximum quantity of water to be discharged in one batch through the hot water circuit can be cooled down to a lowest predetermined temperature.

Further embodiments of the invention will be discussed in detail below with reference to the appended figures.

Figure 1 shows an apparatus functioning in the same manner as the apparatus known from the abovementioned US 4,601,263.

Figure 2 shows a first embodiment of an apparatus according to the invention in which cooled water is mixed, via a heat exchanger, with hot water tapped directly from the vessel.

Figure 3 shows a second embodiment of an apparatus according to the invention, in which use is made of an adjustable throughput-limiting element which is controlled by a control unit as a function of the temperature of the water in the vessel.

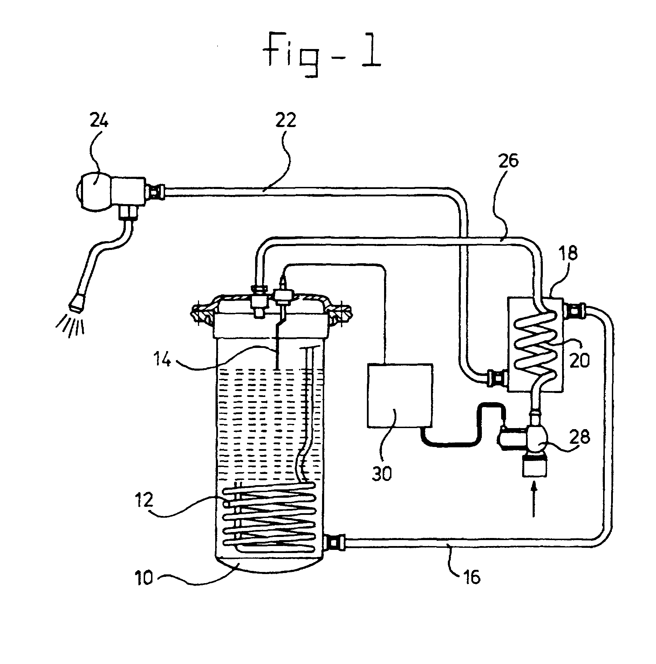

The apparatus that is illustrated in Figure 1 in fact belongs to the prior art. This known apparatus comprises a pressure vessel 10 in which an electrical heating coil is arranged. The pressure vessel contains water, which is brought to the boil by the coil 12. The upper level of the water in the vessel is measured with the aid of a level sensor 14. A hot water discharge line 16 is connected to the bottom of the vessel 10. Hot water can be tapped off from the vessel 10 via said line, which hot water has to pass through a heat exchanger 18. A cooling coil 20, through which a cooling medium flows, is located in the reservoir 18. The cooled water is fed via the further discharge line 22 to the discharge tap 24, where it can be tapped off by the user.

The cooling medium which flows through the coil 20 comprises cold water, which originates from the mains water system. Said cold water is pre-heated in the heat exchanger 18 and is then fed via the line 26 to the top of the vessel 10. A tap 28 is located at the input side of the coil 20, which tap 28 is controlled by a control unit 30 on the basis of signals originating from the level sensor 14.

In the steady state, the vessel 10 will be filled with boiling water up to the level which is determined by the level sensor 14. The temperature or pressure controller by means of which the heating coil 12 is controlled is not shown in this figure because it is not of importance for the invention. If the tap 24 is opened to tap off a quantity of hot water, hot water will then start to flow through the line 16, the cooling coil 20 and the further line 22 to the tap 24. The water will pass from the boiler 10 into the line 16 at a temperature which can be appreciably higher than 100 °C. At a pressure of 1½ bar the temperature of the water in the vessel 10 will be approximately 127.4 °C. This water, which is too hot for the user, is now fed through the reservoir 18, where it comes into contact with the relatively cool coil 20. The cooled water will then flow through the line 22 and be dispensed via the tap 24. The level in the vessel 10 will fall as soon as delivery of hot water starts. This fall will be detected by the level sensor 14, which emits a signal to the control unit 30. Said control unit, in turn, controls the tap 28 so that cold water from the mains water system starts to flow through the coil 20. Said cold water has the desired cooling action on the hot water in the reservoir 18, and, after warming up somewhat, will be fed via the line 26 into the vessel 10 to replace the hot water discharged at the bottom.

Depending on the sizing of the heat exchanger 18 and on the throughput rate through the piping system, the hot water from the discharge line 16 will be cooled to a greater or lesser extent. In order to prevent the temperature of the water dispensed from varying substantially, it is preferable to size the capacity of the reservoir 18 such that it is able to contain a quantity of water which corresponds to the maximum quantity of hot water to be tapped off via the tap 24 at any one time. The effect of this is that on tapping off hot water all the water cools down to a uniform level in the heat exchanger 18.

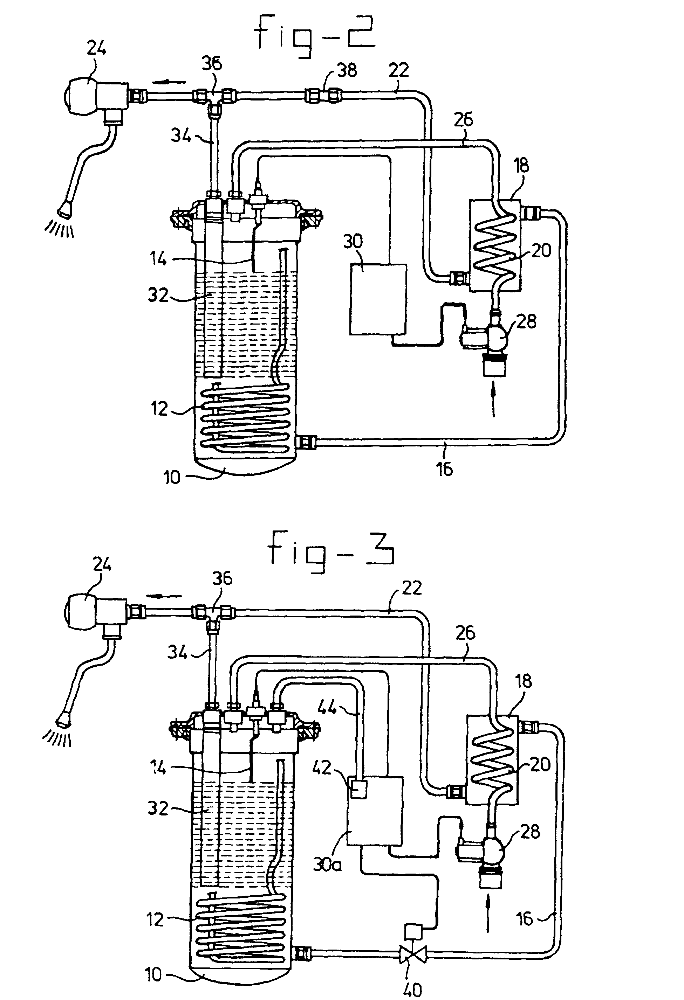

In many cases this cooling will be too great and, therefore, water will be obtained which is at too low a temperature. In order to rectify this shortcoming, it is possible, in accordance with the embodiment in Figure 2, to mix cooled water with a certain quantity of uncooled hot water originating directly from the boiler.

In Figure 2 those components which have already been described in Figure 1 are indicated by the same reference numerals. In addition to the components already described, a riser 32 can be seen in Figure 2, which riser is fitted in the boiler and is intended to feed hot water from a point located at a low level upwards from the boiler 10 to a line 34, which is connected to the discharge line 22 via a T-coupling. During operation, on the one hand, hot boiling water will now be discharged via the riser 32 to the further discharge line 34. On the other hand cooled water from the reservoir 18 will be discharged through the line 22 and will become mixed in the T-piece 36 with the hot boiling water from the vessel.

The cooled water in the reservoir 18 has a predetermined temperature and the amount of water in the reservoir 18 is sufficient to become mixed with the maximum batch of boiling hot water to be discharged from the vessel 10 through the second discharge line 34. The result will be water with a predetermined temperature beneath the boiling point flowing from the tap 24.

The dimensioning of the apparatus is preferably such that it takes a rather short time to deliver a batch of hot but not boiling water through the discharge tap 24. The dimensioning of the apparatus is preferably furthermore such that the velocity of the cold water fed in through the valve 28 is rather low. Therefor at least during the period in which a batch of hot water is supplied the cooling effect in the heat exchanger 18, 20 is neglectible.

As the level of the boiling water in the vessel 10 is decreasing the level sensor will provide a signal which, eventually after a delay, will open the cold water input valve 28. The incoming cold water will start cooling the very hot water which is now present in the reservoir 18. As the steady state is reached again the water level in the boiler is the level of the sensor 14, the reservoir 18 is filled with an amount of cooled water of predetermined temperature and the system is ready to supply another batch of hot but not boiling water.

It is pointed out that all the water which issues from the tap 24 in this way has boiled in the boiler and therefore is free from pathogens and free from air, lime, CO₂ and the like.

In order to obtain a suitable temperature of the mixed water, measures can be taken to match the flow rates in the two discharge lines 34 and 22 to one another. To this end, for example, a throughput-limiting element 38 can be incorporated in the line 22. The degree of limitation which is supplied by the element 38 can be determined experimentally and chosen such that water at a desired temperature, for example in the range between 95 and 98 °C, flows from the tap 24.

If the user wants a more flexible and also more accurate facility for adjustment of the temperature of the water to be tapped off, the embodiment in Figure 3 is then to be preferred. In this embodiment the components which have so far already been described are once again indicated by the same reference numerals. Instead of a fixed flow limiter 38, a variable control valve 40 is fitted, not in the discharge line 22 but in the preceding discharge line 16. It will be clear that the effect of a limiter is the same whether the latter is in the line 16 or in the line 22. The limiting valve 40 is controlled by a modified control unit 30a, which, on the one hand, receives signals from the level sensor 14, but also receives signals from a pressure sensor 42, which is connected via a line 44 to the top of the vessel 10. The pressure in the vessel 10, which is measured via the pressure sensor 42, is related to the temperature of the water in the boiler. Temperature-dependent control is thus possible on the basis of the signals which the pressure sensor 42 supplies. The control unit 30a will adjust the flow-limiting valve 40 on the basis of the signals from the sensor 42 in such a way that the throughput rate through the discharge circuit 40, 16, 18, 22 is such that in the T-piece 36 just sufficient cooled water via the line 22 is mixed with the hot water, supplied via the line 34, to obtain water at the desired temperature from the tap 24.

The control unit 30a also controls the opening and closing of the cold water tap 28, partly on the basis of the signals from the level sensor 14. It is preferred that under all circumstances the temperature of the water in the boiler is maintained well above the boiling point so that at any time the apparatus is ready for operation. In connection therewith it is preferred that the inflow velocity of cold water through the heat exchanger 18 into the boiler is restricted. Therefor in general the outflow velocity of hot water out of the boiler will be larger then the inflow velocity of cold water into the boiler. Inflow can be controlled by the temperature or pressure sensor 42 such that the temperature of the boiler water will not fall underneath a predetermined limit.

It is pointed out that in general a pressure sensor 42 will already be present for controlling the heating coil 12, so that fitting such a sensor will in fact not entail any additional investment.

## Claims

1. Apparatus for heating water to above the boiling point, provided with:
- a closed vessel (10) in which the water to be heated is contained
- heating means (12) for heating the water in the vessel
- a feed connection (26) with a feed tap for feeding cold water into the vessel
- control means (30) for controlling the feed tap such that a predetermined water level in the vessel is maintained,
- a discharge connection with a discharge line (22) to a discharge tap for discharging hot water from the vessel
- a heat exchanger (18) of which the hot water circuit extends between the discharge connection and the discharge tap and the cold water circuit extends between the feed tap and the feed connection such that the hot water in the hot water circuit is able to exchange heat with the cold water in the cold water circuit,
**characterised in that**,
the apparatus is provided with a second discharge connection (34) with a second discharge line for discharging boiling hot water from the vessel, which second discharge line is connected to the first discharge line between the heat exchanger and the discharge tap, such that the boiling hot water from the vessel becomes mixed with cooled water from the heat exchanger,

2. Apparatus according to claim 1, **characterised in that** the apparatus is provided with a throughput-limiting element (38;40) in one of the discharge lines.

3. Apparatus according to Claim 3, **characterised in that** the throughput-limiting element is an adjustable element (40)

4. Apparatus according to Claim 3, **characterised in that** the apparatus is provided with a sensor (44) for direct or indirect measurement of the temperature of the water in the vessel (10) and is provided with a control unit (42) for controlling the throughput-limiting element (40) as a function of the signal from the sensor (44).

5. Apparatus according to Claim 6, **characterised in that** the sensor is a pressure sensor by means of which the pressure in the vessel is measured.

## Patentansprüche

1. Vorrichtung zum Erwärmen von Wasser über den Siedepunkt, versehen mit:
- einem geschlossenen Behälter (10), in dem zu erwärmendes Wasser enthalten ist,
- Heizmitteln (12) zum Erwärmen des Wassers in dem Behälter,
- einer Zulaufverbindung (26) mit einem Zulaufhahn zum Zuführen von kaltem Wasser in den Behälter,
- Steuermitteln (30) zum Steuern des Zulaufhahns derart, daß ein vorab festgelegter Wasserpegel in dem Behälter aufrechterhalten wird,
- einer Ablaufverbindung mit einer Ablaufleitung (22) zu einem Ablaufbahn zum Ablassen von heißem Wasser aus dem Behälter,
- einem Wärmetauscher (18), von dem der Heißwasserkreislauf sich zwischen der Ablaufverbindung und dem Ablaufhahn erstreckt und der Kaltwasserkreislauf sich zwischen dem Zulaufhahn und der Zulaufverbindung erstreckt, so daß das heiße Wasser in dem Heißwasserkreislauf Wärme mit dem kaltem Wasser in dem Kaltwasserkreislauf austauschen kann,
**dadurch gekennzeichnet, daß**
die Vorrichtung mit einer zweiten Ablaufverbindung (34) mit einer zweiten Ablaufleitung zum Ablassen von kochendem heißem Wasser aus dem Behälter versehen ist, wobei die zweite Ablaufleitung mit der ersten Ablaufleitung zwischen dem Wärmetauscher und dem Ablaufhahn verbunden ist, so daß das kochende heiße Wasser aus dem Behälter mit dem gekühlten Wasser aus dem Wärmetauscher vermischt wird.

2. Vorrichtung nach Anspruch 1, **dadurch gekennzeichnet, daß** die Vorrichtung mit einem durchsatzbegrenzenden Element (38; 40) in einer der Ablaufleitungen versehen ist.

3. Vorrichtung nach Anspruch 2, **dadurch gekennzeichnet, daß** das durchsatzbegrenzende Element ein einstellbares Element (40) ist.

4. Vorrichtung nach Anspruch 3, **dadurch gekennzeichnet, daß** die Vorrichtung mit einem Sensor (44) zur direkten oder indirekten Messung der Temperatur des Wassers in dem Behälter (10) versehen ist und mit einer Steuereinheit (42) zum Steuern des durchsatzbegrenzenden Elements (40) als eine Funktion des Signals von dem Sensor (44) versehen ist.

5. Vorrichtung nach Anspruch 6, **dadurch gekennzeichnet, daß** der Sensor ein Drucksensor ist, mit dem der Druck in dem Behälter gemessen wird.

## Revendications

1. Dispositif pour chauffer de l'eau jusqu'au-dessus du point d'ébullition, muni :
d'un récipient fermé (10) dans lequel est contenue l'eau destinée à être chauffée ;
des moyens de chauffage (12) pour chauffer l'eau dans le récipient ;
une liaison d'alimentation (26) avec un robinet d'alimentation pour amener l'eau froide dans le récipient ;
des moyens de commande (30) pour commander le robinet d'alimentation de telle sorte qu'un niveau d'eau prédéterminé soit maintenu dans le récipient ;
une liaison d'évacuation avec une ligne d'évacuation (22) vers un robinet d'évacuation pour évacuer l'eau chaude du récipient ;
un échangeur de chaleur (18) dont le circuit d'eau chaude s'étend entre la liaison d'évacuation et le robinet d'évacuation et le circuit d'eau froide s'étend entre le robinet d'alimentation et la liaison d'alimentation de telle sorte que l'eau chaude située dans le circuit d'eau chaude soit capable d'échanger de la chaleur avec l'eau froide située dans le circuit d'eau froide,
**caractérisé en ce que** :
le dispositif est muni d'une seconde liaison d'évacuation (34) avec une seconde ligne d'évacuation pour évacuer l'eau chaude bouillante du récipient, ladite seconde ligne d'évacuation étant reliée à la première ligne d'évacuation entre l'échangeur de chaleur et le robinet d'évacuation, de telle sorte que l'eau chaude bouillante provenant du récipient se mélange avec l'eau froide provenant de l'échangeur de chaleur.

2. Dispositif selon la revendication 1, **caractérisé en ce que** le dispositif est muni d'un élément limiteur de débit(38;40)dans l'une des lignes d'évacuation.

3. Dispositif selon la revendication 2, **caractérisé en ce que** l'élément limiteur de débit est un élément réglable (40).

4. Dispositif selon la revendication 3, **caractérisé en ce que** le dispositif est muni d'un détecteur (44) pour une mesure directe ou indirecte de la température de l'eau dans le récipient (10) et est muni d'un module de commande (42) pour commander l'élément limiteur de débit (40) en fonction du signal provenant du détecteur (44).

5. Dispositif selon la revendication 6 , **caractérisé en ce que** le détecteur est un détecteur de pression au moyen duquel est mesurée la pression dans le récipient.
